# EUROPEAN PATENT APPLICATION

(11) **EP 4 782 945 A1**
(43) Date of publication of application: **29.07.2026**
(21) Application number: 25181666.6
(22) Date of filing: 10.06.2025
(51) Int. Cl.: G05B 19/418, G06Q 10/0631, G06Q 10/067, G06Q 50/04

(54) **PRODUCTION LINE PLANNING DEVICE AND PRODUCTION LINE PLANNING METHOD**

(30) Priority: 24.01.2025 JP 2025010997
(71) Applicant: Hitachi, Ltd., Tokyo 100-8280 (JP)
(72) Inventor: KITAJIMA, Kaoru, Tokyo, 100-8280 (JP); NAKANO, Takahiro, Tokyo, 100-8280 (JP); TSUTSUMI, Daisuke, Tokyo, 100-8280 (JP)
(74) Representative: MERH-IP Matias Erny Reichl Hoffmann Patentanwälte PartG mbB

(57) **Abstract**

A production line planning device for planning a production line for a product includes: a storage unit configure to store product operation information in which a product and an operation necessary for producing the product are associated and stored, operation facility correspondence information in which the operation and a facility necessary for performing the operation are associated and stored, component classification information in which a main component and an auxiliary component that make up the facility are associated and stored, and facility common ID information in which the main component of the facility and a reference facility are associated and stored; a process planning variable calculation unit configured to, when the operation included in the product operation information matches the operation included in the operation facility correspondence information, add the operation, the facility, and a decision variable to process planning variable information in a case where the facility included in the matched operation facility correspondence information is not included in the reference facility in the facility common ID information; a process planning variable cost calculation unit configured to obtain, based on the component classification information, a cost of the operation and the facility corresponding to the added decision variable; and an output device configured to output the number of the decision variables added by the process planning variable calculation unit and an investment cost obtained by adding up costs of the respective decision variables obtained by the process planning variable cost calculation unit.

## Description

### BACKGROUND OF THE INVENTION

### 1. Field of the Invention

The present invention relates to a production line planning device and a production line planning method.

### 2. Description of Related Art

JP2020-201721A (PTL 1) discloses a production planning support device that stores facility element information including a specification of a facility element, operation element information including a specification of an operation element including a triggering condition of a necessary operation element and an output destination after operation completion, and basic data of a production line model defined by a combination of components including link information on the facility element and the operation element, the facility element information, and the operation element information, or a production line model including a combination of the operation element and the facility element for which link information can be set, generates a problem space including dimensional axes corresponding to a plurality of types of changeable specifications in the facility element information, changeable specifications in the operation element information, and changeable link information as variable parameters of a plurality of independent variables, and causes a training processing unit to acquire an optimal solution or an optimal solution group for production planning using the problem space as a boundary condition.

### Citation List

### Patent Literature

PTL 1: JP2020-201721A

### SUMMARY OF THE INVENTION

PTL 1 describes an easy and accurate definition of the problem space for production line planning. However, according to the definition in PTL 1, the problem space formed by a link between the operation element and the facility element cannot be reduced.

In the problem space formed by the link between the operation element and the facility element, when the number of operation elements increases, the number of facility elements capable of handling a plurality of operations increases according to the number of combinations of operation elements, and thus the problem space expands and a calculation time required for the production line planning becomes enormous.

For example, when a facility element such as an industrial robot and a robot hand and a facility element such as an industrial robot and a robot driver are assumed for an operation element such as pick-and-place and an operation element such as screw tightening, two industrial robots, a robot hand, and a robot driver are required to perform both operations.

In order to consider that one industrial robot performs both operations using a robot hand and a robot driver, a new industrial robot that can handle both operations needs to take into account facility elements such as a robot hand and a robot driver as inputs. That is, when the number of operation elements increases, the number of facility elements capable of handling a plurality of operations increases according to the number of combinations of operation elements, and thus the problem space expands and the calculation time required for the production line planning becomes enormous.

Therefore, according to the invention, the calculation time required for the production line planning can be reduced by viewing a facility element as a combination of components that make up the facility element and reducing the number of facility elements while maintaining a combination of the components required for the operation element.

For example, a device is provided in which, when an operation element called a pick-and-place corresponds to a component called an industrial robot, a robot hand is associated therewith, and when an operation element called screw tightening corresponds to a component called an industrial robot, a robot driver is associated therewith.

The above object can be achieved by a production line planning device for planning a production line for a product. The production line planning device includes: a storage unit configure to store product operation information in which a product and an operation necessary for producing the product are associated and stored, operation facility correspondence information in which the operation and a facility necessary for performing the operation are associated and stored, component classification information in which a main component and an auxiliary component that make up the facility are associated and stored, and facility common ID information in which the main component of the facility and a reference facility are associated and stored; a process planning variable calculation unit configured to, when the product operation information matches the operation included in the operation facility correspondence information, add the operation, the facility, and a decision variable to process planning variable information in a case where the facility included in the matched operation facility correspondence information is not included in the reference facility in the facility common ID information; a process planning variable cost calculation unit configured to obtain, based on the component classification information, a cost of the operation and the facility corresponding to the added decision variable; and/or an output device configured to output the number of decision variables added by the process planning variable calculation unit and an investment cost obtained by adding up costs of the respective decision variables obtained by the process planning variable cost calculation unit.

According to the invention, a production line planning device capable of reducing a problem space for production line planning and reducing a calculation time can be provided.

Problems, configurations, and effects other than those described above will be clarified by description of the following embodiment.

### BRIEF DESCRIPTION OF THE DRAWINGS

FIG. 1 is a diagram illustrating an example of a production line and process planning;
FIG. 2 is a block diagram illustrating a configuration example of a production line planning device according to an embodiment;
FIG. 3 is a diagram illustrating an example of product operation information in the embodiment;
FIG. 4 is a diagram illustrating an example of component information in the embodiment;
FIG. 5 is a diagram illustrating an example of facility candidate information in the embodiment;
FIG. 6 is a diagram illustrating an example of operation facility correspondence information in the embodiment;
FIG. 7 is a diagram illustrating an example of process planning condition information in the embodiment;
FIG. 8 is a diagram illustrating an example of component classification information for an intra-operation main component calculation in the embodiment;
FIG. 9 is a diagram illustrating an example of component classification information for a common component calculation in the embodiment;
FIG. 10 is a diagram illustrating an example of facility common ID information in the embodiment;
FIG. 11 is a diagram illustrating an example of process planning variable information in the embodiment;
FIG. 12 is a diagram illustrating an example of process planning result information in the embodiment;
FIG. 13 is an example of a flowchart illustrating production line planning processing in the embodiment;
FIG. 14 is an example of a flowchart illustrating facility common ID information calculation processing in the embodiment;
FIG. 15 is an example of a flowchart illustrating process planning variable information calculation processing in the embodiment;
FIG. 16 is an example of a flowchart illustrating process planning variable cost calculation processing in the embodiment;
FIG. 17 is an example of a flowchart illustrating main component calculation processing in the embodiment;
FIG. 18 is an example of a flowchart illustrating common component calculation processing in the embodiment; and
FIG. 19 is an example of an output screen of the production line planning device in the embodiment.

### DESCRIPTION OF EMBODIMENTS

In the following embodiments, when necessary for convenience, the description will be made by being divided into a plurality of sections or embodiments, but unless otherwise stated, they are not unrelated to each other, and one has a relation with all or a part of modifications, details, supplementary explanations, and the like of the other.

In the following embodiments, when referring to the number of elements (including the number, numerical values, amounts, ranges, or the like) or the like, the number of elements is not limited to a specific number, and may be the specific number or more or the specific number or less, unless otherwise specified or except a case where the number is apparently limited to a specific number in principle.

Further, in the following embodiments, it is needless to mention that components (also including element steps and the like) thereof are not necessarily essential unless otherwise specified or unless clearly considered to be essential in principle.

Similarly, in the following embodiments, when a shape, a positional relation, or the like of a component or the like is referred to, the shape or the like is substantially approximate or similar to the shape or the like unless otherwise specified or clearly considered otherwise in principle. The same applies to the above-described numerical values and ranges.

In all drawings for describing the embodiments, the same members are denoted by the same reference numerals in principle, and repeated description thereof will be omitted. Even for the same component, in a case where there is a high possibility of confusion arising from an environmental change or the like when the component shares a name with the component before the change, a different reference numeral or name may be given to the component.

In the following embodiment, an "input device" and an "output device" are one or more interface devices. The one or more interface devices may be at least one of the following.

The input/output (I/O) interface device is an interface device for at least one of an I/O device and a remote display computer. The I/O interface device for a display computer may be a communication interface device.

The at least one I/O device may be a user interface device, for example, an input device such as a keyboard and a pointing device, or an output device such as a display device.

The one or more communication interface devices may be one or more communication interface devices of the same type (for example, one or more network interface cards (NICs)) or two or more communication interface devices of different types (for example, NIC and host bus adapter (HBA)).

A "memory" is one or more memory devices serving as an example of one or more storage devices and may be typically a main storage device. At least one memory device in the memory may be a volatile memory device or a non-volatile memory device.

An "external storage device" may be one or more persistent storage devices, which are examples of one or more storage devices. The persistent storage device may be typically a non-volatile storage device (for example, an auxiliary storage device), and, for example, a hard disk drive (HDD), a solid state drive (SSD), a non-volatile memory express (NVME) drive, or a storage class memory (SCM).

The "storage unit" or the "external storage device" may be one or both of a memory and a permanent storage device.

A "processing unit" or a "processor" may be one or more processor devices. At least one processor device may be a microprocessor device such as a central processing unit (CPU), and may be another type of processor device such as a graphics processing unit (GPU). At least one processor device may be a single core or a multi-core. At least one processor device may be a processor core.

At least one processor device may be a broadly defined processor device such as a circuit (for example, a field-programmable gate array (FPGA), a complex programmable logic device (CPLD), or an application specific integrated circuit (ASIC)) that is a collection of gate arrays in a hardware description language for performing a part or all the process.

Functions may be described by an expression of "yyy unit", and the functions may be implemented by one or more computer programs being executed by a processor, may be implemented by one or more hardware circuits (for example, FPGA or ASIC), or may be implemented by a combination thereof.

When a function is implemented by executing a program by a processor, the function may be at least a part of the processor as a specified process is executed using a storage device and/or an interface device as appropriate. The process described with a function as a subject may be a process performed by a processor or a device including the processor.

The program may be installed from a program source. The program source may be a program distribution computer or a computer-readable recording medium (for example, a non-transitory recording medium). Description of functions is an example. A plurality of functions may be integrated into one function, or one function may be divided into a plurality of functions.

The processing may be described using the "program" or "calculation unit" as a subject. The processing described with the program as the subject may be processing executed by a processor or a device including the processor. Two or more programs may be implemented as one program, or one program may be implemented as two or more programs.

In the following description, information from which an output is obtained in response to an input may be described in a form of a table in an expression such as "xxx information", but a configuration of each table is an example, and one table may be divided into two or more tables, or all or some of two or more tables may be one table.

Hereinafter, an embodiment will be described with reference to the drawings.

### Embodiment 1

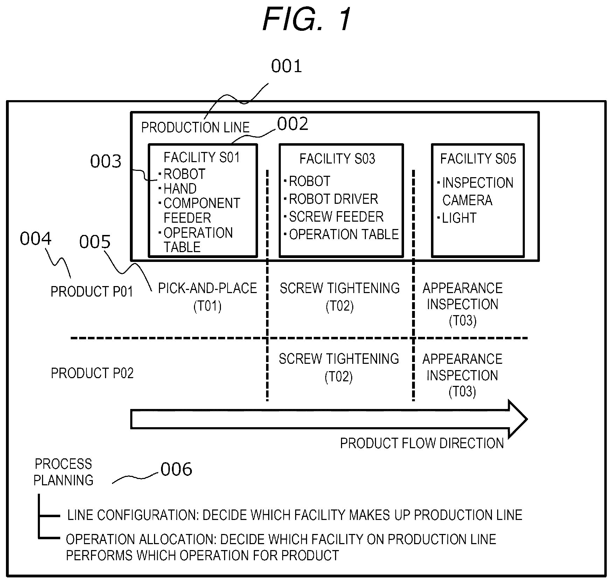

FIG. 1 is a diagram illustrating an example of a production line and process planning. In a production line 001, one or more facilities are arranged, and a product is produced by flowing between the facilities.

A facility 002 is an element that makes up the production line 001, and includes one or more components 003. The component 003 is an element that makes up the facility 002. Examples thereof include a robot, a hand, an operator, a component feeder, and an operation table.

A product 004 is a target to be produced on the production line 001, and one or more operations 005 are required for the production. In the present embodiment, even when a product is mass-produced, an actual product is not treated as an individual product 004, but products that require the same operations to be produced are treated as the same product 004.

The operation 005 is an operation required to produce a product, and needs to be assigned to the facility 002 that can be handled for execution. For example, pick-and-place is assigned to a facility S01.

Process planning 006 includes a line configuration for deciding which facility makes up the production line, and an operation allocation for deciding which facility on the production line performs which operation for the product.

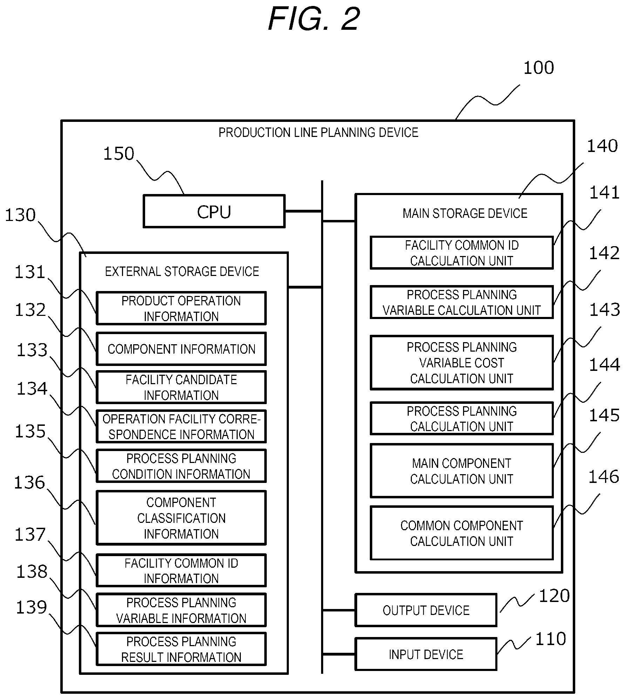

FIG. 2 is an example of a configuration diagram of a production line planning device of the present embodiment. In the present embodiment, an example in which a production line planning device 100 will be described as being implemented by a standalone computing device including an input device 110, an output device 120, an external storage device 130, a main storage device 140, and a central processing unit (CPU) 150 that are connected by a bus.

The production line planning device 100 also may be implemented using a cloud service that provides a computer resource. The input device 110 is a device that receives information from a user or an external system to the production line planning device.

The output device 120 is a device that outputs information to a production line planning device to a user or an external system. The external storage device 130 is a device that stores information received from the input device 110, information to be processed by the production line planning device, and information output from the output device 120.

The external storage device 130 stores product operation information 131, component information 132, facility candidate information 133, operation facility correspondence information 134, process planning condition information 135, component classification information 136, facility common ID information 137, process planning variable information 138, and process planning result information 139.

The main storage device 140 performs a calculation based on the information stored in the external storage device 130 and stores the calculation result in the external storage device 130. The main storage device 140 stores a facility common ID calculation unit 141, a process planning variable calculation unit 142, a process planning variable cost calculation unit 143, a process planning calculation unit 144, a main component calculation unit 145, and a common component calculation unit 146.

Each calculation unit implemented as a software module stored in the main storage device 140 refers to the information stored in the external storage device 130 and is executed by the CPU 150.

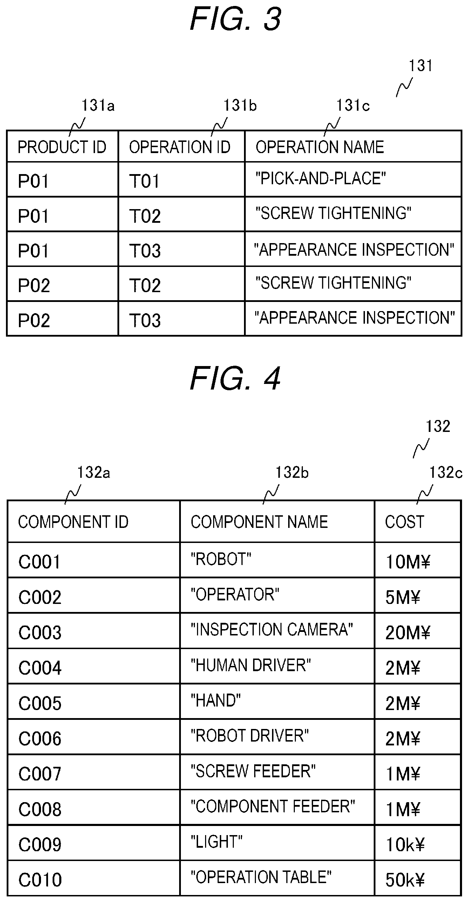

FIG. 3 is a diagram illustrating an example of the product operation information in the embodiment. A product ID 131a is an identifier for distinguishing a plurality of types of products that are partially different in operation for production, and is an identifier different for each product to be produced. When there is only one product and there is no need to distinguish between them, the product ID 131a may be omitted.

An operation ID 131b is an identifier for distinguishing operations for producing a product, and a different identifier is stored for each operation. The same identifier may be used for different products when a common operation exists.

For example, in a built to order product in which different components are assembled for each product type, the same identifier may be used for an operation of assembling a common component between two product types in which some components are different.

An operation name 131c is a name given to an operation for producing a product, and is uniquely determined for the operation ID 131b. The same operation name 131c may be used for different operation ID 131b.

FIG. 4 is a diagram illustrating an example of the component information in the embodiment. The component information 132 is information on a component that makes up a facility that makes up a production line. A component ID 132a is an identifier for distinguishing components, and is an identifier independent for each component.

A component name 132b is a name given to a component, and is uniquely determined for the component ID 132a. The same component name 132b may be used for different component ID 132a.

A cost 132c is a numerical value representing a cost of a component, and may include currency as a unit. When cost information is not required for process planning, the cost 132c may be omitted.

Not only a purchase price but also a cost per hour such as a labor cost or a depreciation cost may be used. As a configuration item of the component information, a value such as a carbon dioxide emission amount may be included.

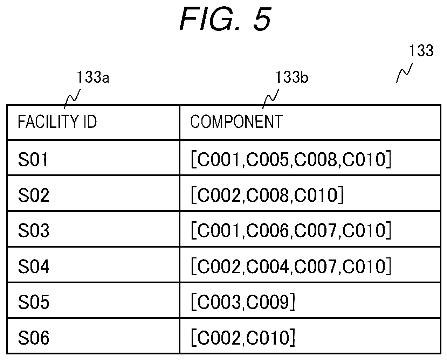

FIG. 5 is a diagram illustrating an example of the facility candidate information in the embodiment. A facility ID 133a is an identifier for distinguishing facility candidates, and is an identifier different for each facility candidate.

A component 133b stores one or more component IDs that make up a facility candidate. The component ID corresponds to the component ID 132a in the component information.

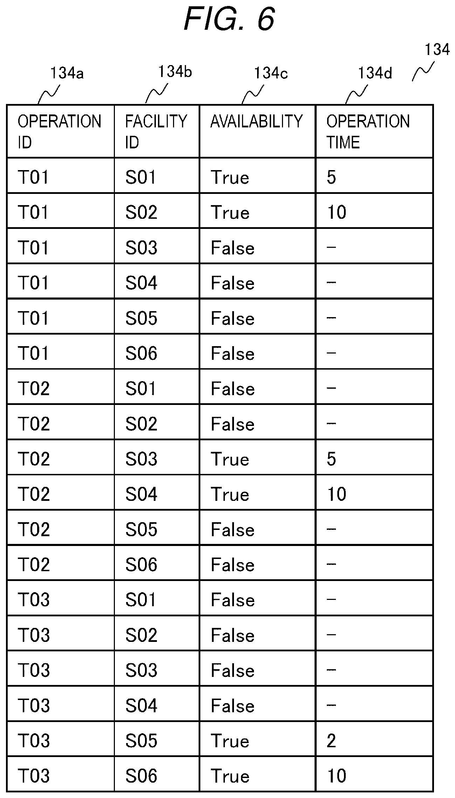

FIG. 6 is a diagram illustrating an example of the operation facility correspondence information in the embodiment. The operation facility correspondence information is information indicating whether an operation can be executed by a facility.

An operation ID 134a is an identifier of an operation, and corresponds to the operation ID 131b in the product operation information. A facility ID 134b is an identifier of a facility candidate, and corresponds to the facility ID 133a in the facility candidate information. An availability 134c is information indicating whether an operation indicated by an operation ID can be executed by a facility candidate indicated by a facility ID.

In the example, True is stored when the execution is possible, and False is stored when the execution is impossible. An operation time 134d is a numerical value representing a time taken for an operation when the availability 134c indicates that the execution is possible, and may include a unit representing time. When the availability 134c indicates that the execution is impossible, data representing a time is not included. For example, a general hyphen symbol may be used to indicate that no data is included.

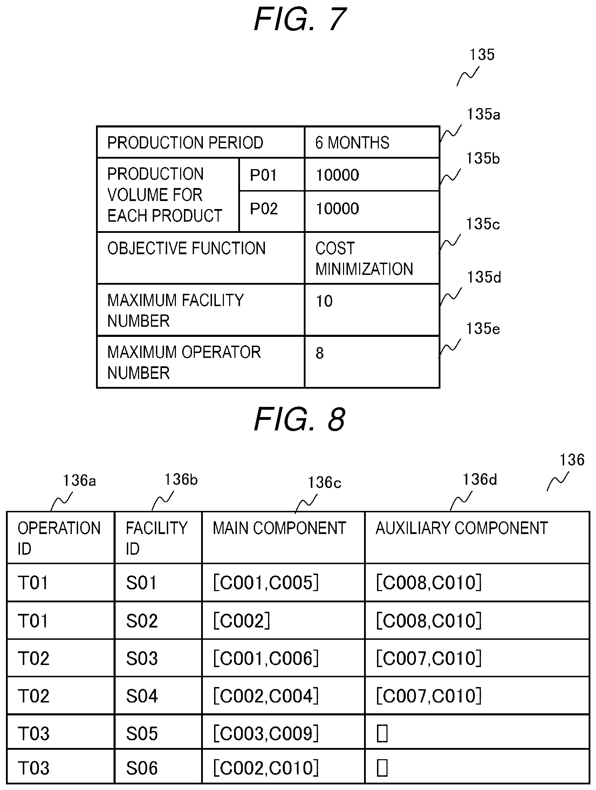

FIG. 7 is a diagram illustrating an example of the process planning condition information in the embodiment. A production period 135a is a period during which a product is produced on a planned production line. A production volume 135b for each product is a production volume to be produced on a production line for each product ID. An objective function 135c is an objective function for process planning, and can be a term or formula that is generally desired to be minimized or maximized in the process planning, such as minimizing a cost or minimizing a cycle time.

A maximum facility number 135d may include information on the number of facilities on a production line that is limited due to a size of a factory or the like. A maximum operator number 135e may include information on a limit on the number of operators required for a production line.

FIG. 8 is a diagram illustrating an example of the component classification information for an intra-operation main component calculation in the embodiment. FIG. 8 is an example at the end of the intra-operation main component calculation.

An operation ID 136a is an identifier of an operation, and corresponds to the operation ID 131b in the product operation information. A facility ID 136b is an identifier of a facility candidate, and corresponds to the facility ID 133a in the facility candidate information.

A main component 136c stores one or more different component IDs for each facility ID 136b in the same operation ID 136a. The component ID corresponds to the component ID 132a in the component information.

An auxiliary component 136d stores zero or more component IDs not included in the main component 136c among component IDs included in the component 133b of a facility candidate in the facility candidate information corresponding to the facility ID 136b. The above-described processing may be implemented by calling arithmetic processing such as a macro each time.

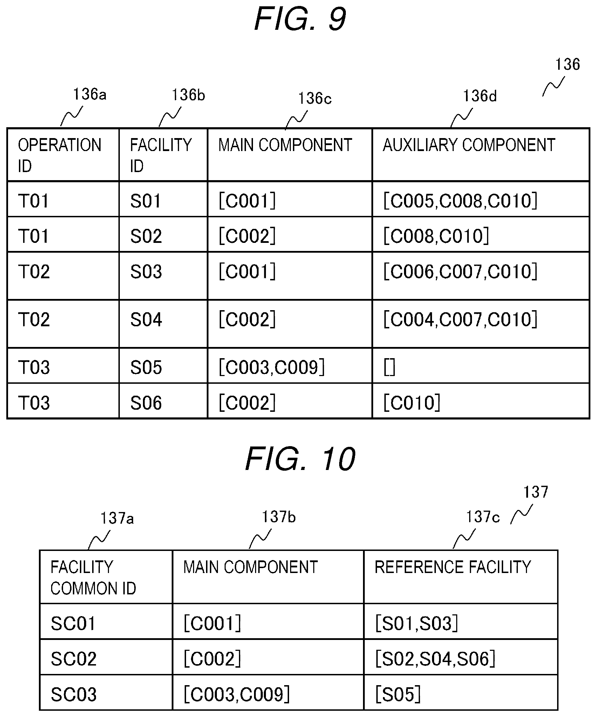

FIG. 9 is a diagram illustrating an example of the component classification information for a common component calculation in the embodiment. FIG. 9 is an example of the component classification information at the end of the common component calculation or when received from the input device 110.

The operation common component calculation is a calculation for reducing the number of components included in the main component 136c and moving the components to the auxiliary component 136d.

FIG. 10 is a diagram illustrating an example of the facility common ID information in the embodiment. FIG. 10 is an example of the facility common ID information 137 in which facility candidates included in the facility candidate information 133 are classified and distinguished by a common ID. A facility common ID 137a is an identifier for classifying the facility candidates included in the facility candidate information by the main component 136c in the component classification information and distinguishing the classified set.

A main component 137b is the same as the main component 136c classified under the facility common ID 137a. A reference facility 137c stores one or more facility IDs 133a in the facility candidate information classified under the facility common ID 137a.

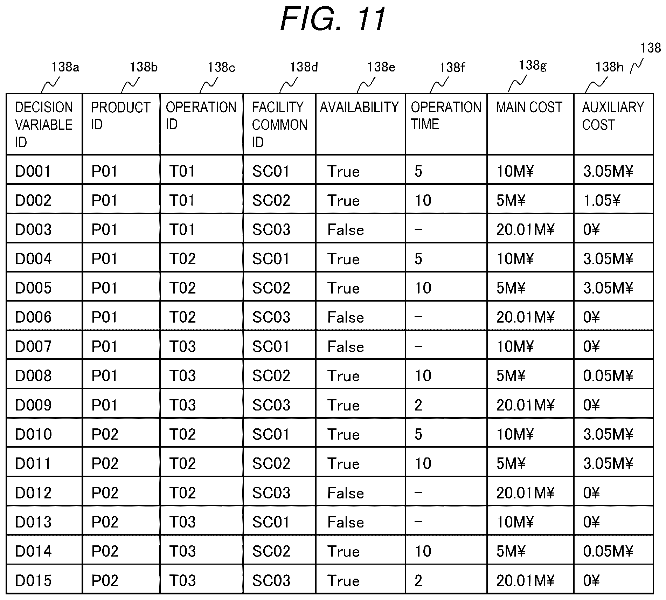

FIG. 11 is a diagram illustrating an example of the process planning variable information in the embodiment. A decision variable ID 138a is a variable indicating whether a production line is made up by a facility candidate in process planning. The decision variable ID 138a is a variable indicating whether to assign a product operation and a facility candidate.

For example, the decision variable is set to an integer equal to or greater than 0, and when the decision variable is 0, no facility candidate is used in the configuration of the production line and no operation is assigned. When the decision variable is 1 or more, facility candidates are installed from an end of the production line in the order of the decision variable ID, and operations are assigned.

The meaning of the variable is not limited to this example. For example, a variable indicating whether a production line is made up by a facility candidate and a variable indicating whether an operation for a product and a facility candidate are assigned may be set as separate decision variables.

A product ID 138b is an identifier of a product, and corresponds to the product ID 131a. An operation ID 138c is an identifier of an operation, and corresponds to the operation ID 131b in the product operation information. A facility common ID 138d is an identifier of a set of classified facility candidates, and corresponds to the facility common ID 137a.

An availability 138e is information indicating whether an operation can be executed by a facility, and corresponds to the availability 134c. In this example, True indicates that the execution is possible, and False indicates that the execution is impossible. An operation time 138f is a numerical value representing a time taken for an operation, and corresponds to the operation time 134d.

A main cost 138g is a sum of the cost 132c in the component information for all component IDs included in the main component 137b in the facility common ID information in which the facility common ID 137a corresponds to the facility common ID 138d.

An auxiliary cost 138h is a sum of the cost 132c in the component information for all component IDs included in the auxiliary component 136d in which the operation ID 138c corresponds to the operation ID 136a, and the facility ID 136b is included in the reference facility 137c in the facility common ID information in which the facility common ID 137a corresponds to the facility common ID 138d.

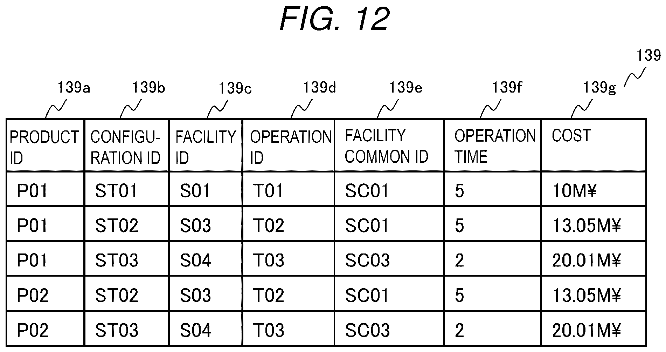

FIG. 12 is a diagram illustrating an example of the process planning result information in the embodiment. FIG. 12 is an example of process planning result information representing a facility candidate that makes up a production line and an operation for producing a product that is assigned to the facility candidate, as a result of the process planning.

A product ID 139a is an identifier of a product, and corresponds to the product ID 131a. A configuration ID 139b is an identifier sequentially assigned to a facility that makes up a production line. In the case of a configuration including a plurality of the same facility candidates, a different identifier is assigned to each facility candidate.

A facility ID 139c is an identifier of a facility candidate, and corresponds to the facility ID 133a in the facility candidate information. An operation ID 139d is an identifier of an operation, and corresponds to the operation ID 131b in the product operation information. A facility common ID 139e is an identifier of a set of classified facility candidates, and corresponds to the facility common ID 137a.

An operation time 139f is a numerical value representing a time taken for an operation, and corresponds to the operation time 134d. A cost 139g is a sum of the cost 132c in the component information for all the components 133b in the facility candidate information corresponding to the facility ID 139c.

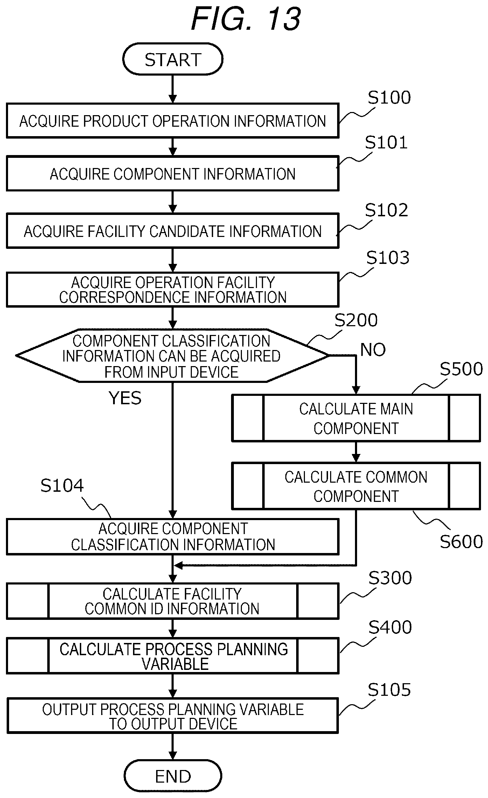

FIG. 13 is an example of a flowchart illustrating production line planning processing in the embodiment. First, in S100, an input from a user is received from an input device, and the product operation information 131 is stored in the external storage device 130. Next, in S101, the component information 132 received from the input device is stored in the external storage device 130.

Next, in S102, the facility candidate information 133 received from the input device is stored in the external storage device 130. Next, in S103, the operation facility correspondence information 134 received from the input device is stored in the external storage device 130.

Next, in S200, it is determined whether component classification information can be acquired from the input device. When it is determined that the component classification information can be acquired, the process proceeds to S104.

When the component classification information cannot be acquired, the process proceeds to S500, and the main component calculation unit 145 calculates a main component and stores the component classification information in the component classification information 136. According to the processing in S500, the number of steps of creating component classification information in advance can be reduced.

Next, the process proceeds to S600, the common component calculation unit 146 calculates a common component, the component classification information in the component classification information 136 is updated, and the process proceeds to S104.

The processing in S600 is not necessarily performed, but a calculation time for the process planning can be reduced by increasing the number of overlapping facility candidates for the main component, reducing the number of facility common IDs after the calculation of the facility common ID information in S300, and reducing the number of decision variable IDs 138a in the process planning variable information after a process planning calculation in S400. In S104, the component classification information is stored.

Next, in S300, the facility common ID calculation unit 141 calculates the facility common ID information and stores the facility common ID information. Instead of providing the facility common ID calculation unit 141, similar processing may be implemented by calculating process planning variable information using a macro or the like.

By outputting the decision variable ID included in the process planning variable information to the output device, the number of decision variable IDs is smaller than that of the facility candidates in the operation facility correspondence information, and thus the reduction effect of the decision variable ID can be known.

For example, the number of rows of operation IDs T01, T02, and T03 in the operation facility correspondence information in FIG. 6 is 18, but the number of rows of the operation IDs T01, T02, and T03 for a product ID P01 in the process planning variable information in FIG. 11 is reduced to 9.

By knowing the reduction effect of the decision variable ID, the user can estimate a calculation time required for the objective function to converge, and can reduce an unnecessary calculation time. Inappropriate process planning result information can be prevented from being obtained due to insufficient calculation termination.

The process planning calculation may be performed using the process planning variable information 138 and the process planning condition information 135 obtained here, and the process planning result may be output together with the process planning variable in S105. In the process planning calculation, a genetic algorithm or a linear programming problem, which is a general optimization method, is used to decide which facility makes up a production line and which operation for a product is performed by the facility.

In general optimization, an objective function to be maximized or minimized, a decision variable that is a variable to be decided and necessary for calculation of the objective function, and a constraint that the decision variable is to be satisfied are required.

First, as the decision variable, for example, in a case where the decision variable ID 138a in the process planning variable information is treated as an integer variable indicating the number of the facility on the production line, when the decision variable ID 138a is a negative number, the operation for the product that is indicated by the product ID and the operation ID is not performed by the facility indicated by the facility common ID.

When the decision variable ID 138a is a number N equal to or greater than 0, it indicates that the facility indicated by the facility common ID makes up the N-th facility on the production line and the operation for the product that is indicated by the product ID and the operation ID is performed by the facility.

Next, as the objective function, when an objective function Xc in the process planning condition information is cost minimization, a total cost necessary for the production line is calculated based on the main cost 138g and the auxiliary cost 138h of the facility in which the decision variable ID 138a in the process planning variable information is 0 or more.

As a constraint condition, for example, a constraint condition under which a target production volume needs to be produced within a production period is considered. For the facility in which the decision variable ID 138a in the process planning variable information is 0 or more, a cycle time of the facility for each product can be calculated by summing the operation time 138f for each product ID.

A constraint is imposed that a product of the cycle time for each product and the production volume 135b for each product in the process planning condition information in all the facilities that make up the production line is smaller than the production period 135a in the process planning condition information.

A constraint can also be imposed that the maximum facility number 135d in the process planning condition information 135 is greater than a maximum value of the decision variable ID 138a in the process planning variable information. A constraint can also be imposed that the maximum operator number 135e is greater than a total number of operators for the components of the facility indicated by the facility common ID of the decision variable ID 138a in the process planning variable information.

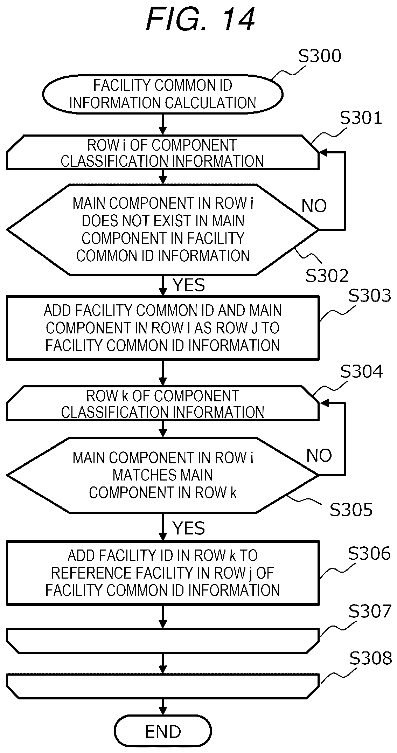

FIG. 14 is an example of a flowchart illustrating facility common ID information calculation processing in the embodiment. The facility common ID calculation unit 141 extracts a main component common to a facility using the component classification information 136, and assigns a facility common ID to each main component, thereby creating the facility common ID information 137.

First, in S301, loop processing is started for all rows in the component classification information 136, and a row to be processed in the component classification information 136 is assumed to be a row i.

Next, in S302, it is determined whether the main component 136c in the row i exists in the main component 137b in the facility common ID information 137. When the main component 136c in the row i exists, the loop processing in S301 is advanced. When the main component 136c in the row i does not exist, the process proceeds to S303.

Next, in S303, the facility common ID 137a is newly generated in the facility common ID information 137, and the main component 136c in the row i is set in the main component 137b. The added row is assumed to be a row j.

Next, in S304, loop processing is started for all rows in the component classification information 136, and a row to be processed in the component classification information 136 is assumed to be a row k. Next, in S305, it is determined whether the main component in the row i matches a main component in the row k. When there is no match, the loop processing in S304 is advanced. When there is a match, the process proceeds to S306.

Next, in S306, a facility ID in the row k is added to the reference facility 137c in the facility common ID information 137 in the row j. Next, in S307, the loop processing in S304 is advanced. When the loop processing in S304 ends, the process proceeds to S308.

Next, in S308, the loop processing in S301 is advanced. When the loop processing in S301 ends, S300 ends.

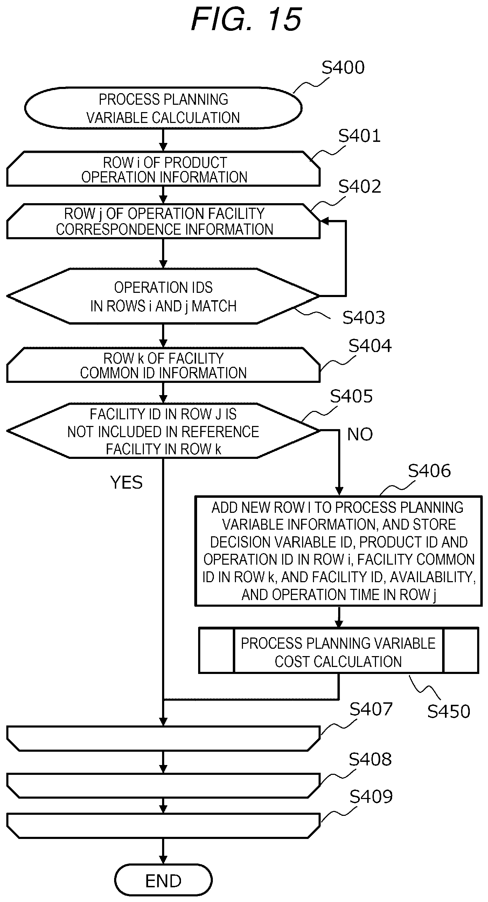

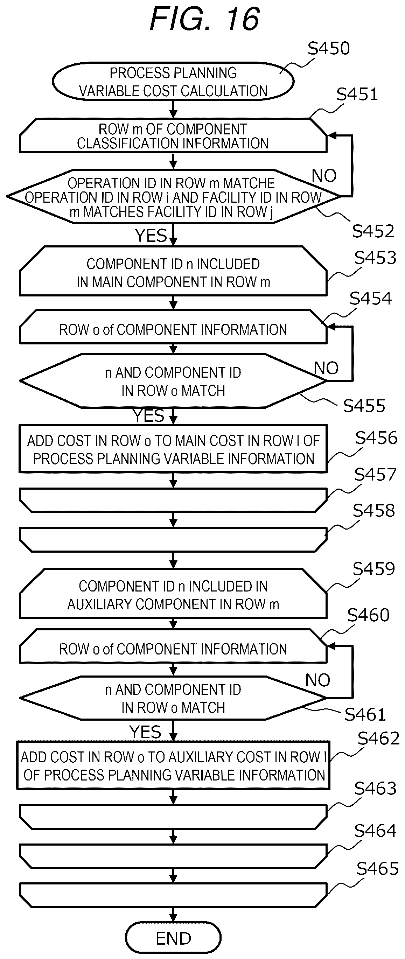

FIG. 15 is an example of a flowchart illustrating process planning variable information calculation processing in the embodiment. The process planning variable calculation unit 142 creates the process planning variable information 138 by replacing the facility ID in the operation facility correspondence information 134 with the corresponding facility common ID using the product operation information 131, the operation facility correspondence information 134, and the facility common ID information 137. A process planning variable cost calculation to be described later with reference to FIG. 16 may be performed.

First, in S401, loop processing is started for all rows of the product operation information in the product operation information 131, and a row to be processed in the product operation information 131 is assumed to be a row i.

Next, in S402, loop processing is started for all rows of the operation facility correspondence information in the operation facility correspondence information 134, and a row to be processed in the operation facility correspondence information 134 is assumed to be a row j. Next, in S403, it is determined whether the operation ID 131b in the row i matches the operation ID 134a in the row j. When there is no match, the loop processing in S402 is advanced. When there is a match, the process proceeds to S404.

Next, in S404, loop processing is started for all rows of the facility common ID information 137, and a row to be processed in the facility common ID information 137 is assumed to be a row k. Next, in S405, it is determined whether the facility ID 134b in the row j is included in the reference facility 137c in the row k. When not included, the process proceeds to S407. When included, the process proceeds to S406.

Next, in S406, the decision variable ID is newly added to the process planning variable information 138, and the product ID and the operation ID in the row i, the facility common ID in the row k, and the facility ID, the availability, and the operation time in the row j are stored. The process proceeds to S450.

Next, in S450, when the cost is included in the component information, the process planning variable cost calculation unit 143 may calculate a process planning variable cost and add the information on the main cost and the auxiliary cost to the process planning variable. By using the main cost and the auxiliary cost, the cost of the facility that makes up the production line can be used as an objective function or a constraint condition during the process planning, and an intention of the user can be reflected in the process planning in more detail.

FIG. 16 is an example of a flowchart illustrating process planning variable cost calculation processing in the embodiment. The process planning variable cost calculation unit 143 calculates a total cost of the main component and a total cost of the auxiliary component using the component classification information 136 and the component information 132, and modifies the process planning variable information 138.

First, in S451, loop processing is started for all rows of the component classification information of the component classification information 136, and a row to be processed in the component classification information 136 is assumed to be a row m. Next, in S452, it is determined whether the operation ID in the row m matches the operation ID in the row i, and the facility ID in the row m matches the facility ID in the row j. When there is no match, the loop processing in S451 is advanced. When there is a match, the process proceeds to S453.

Next, in S453, loop processing is started for all component IDs included in the main component in the row m, and the component ID to be processed is assumed to be n. Next, in S454, loop processing is started for all rows in the component information 132, and a row to be processed in the component information 132 is assumed to be a row o. Next, in S455, it is determined whether the component ID n matches the component ID in the row o. When there is no match, the loop processing in S455 is advanced. When there is a match, the process proceeds to S456.

Next, in S456, the cost in the row o is added to the main cost in a row l of the process planning variable information 138. Next, in S457, the loop processing in S454 is advanced. When the loop processing ends, the process proceeds to S458. Next, in S458, the loop processing in S453 is advanced. When the loop processing ends, the process proceeds to S459.

Next, in S459, loop processing is started for the component ID included in the auxiliary component in the row m. The component ID to be processed is assumed to be n. Next, in S460, loop processing is started for all rows in the component information 132, and a row to be processed in the component information 132 is assumed to be a row o.

Next, in S461, it is determined whether the component ID n matches the component ID in the row o. When there is no match, the loop processing in S460 is advanced. When there is a match, the process proceeds to S462. Next, in S462, the cost in the row o is added to the auxiliary cost in the row l of the process planning variable information 138. Next, in S463, the loop processing in S460 is advanced. When the loop processing ends, the process proceeds to S464.

Next, in S464, the loop processing in S459 is advanced. When the loop processing ends, the process proceeds to S465. Next, in S465, the loop processing in S451 is advanced. When the loop processing ends, S450 ends.

Next, in S407 in FIG. 15, the loop processing in S404 is advanced. When the loop processing ends, the process proceeds to S408. Next, in S408, the loop processing in S402 is advanced. When the loop processing ends, the process proceeds to S409. Next, in S409, the loop processing in S401 is advanced. When the loop processing ends, S400 ends.

Next, in S105 in FIG. 13, the process planning variable information 138 is output to the output device 120.

By providing the process planning condition information 135, the process planning calculation unit 144, and the process planning result information 139, the process planning condition information which is information on the planning condition of the production line necessary for the process planning may be acquired from the input device, and may be stored in the process planning condition information 135, the process planning calculation may be performed by the process planning calculation unit 144 together with the process planning variable information, and the result may be stored in the process planning result information 139, and may be output to the output device. During the process planning calculation, the elapse of the calculation time and the change in the best value of the objective function may be output to the output device as the calculation progress.

Note that the process planning calculation is achieved by calculating the configuration of the facility candidate that makes up the production line and the assignment of the operation for the product to the facility candidate by a genetic algorithm or a linear programming method, which is a general optimization method.

The process planning calculation unit 144 outputs the process planning result information and the calculation progress to the output device, so that a causal relationship between the process planning variable information which is the input of the process planning and the calculation time and the process planning result information becomes clear, and the calculation time can be reduced while obtaining necessary and sufficient process planning result information by confirming that the objective function sufficiently converges and terminating the process planning calculation.

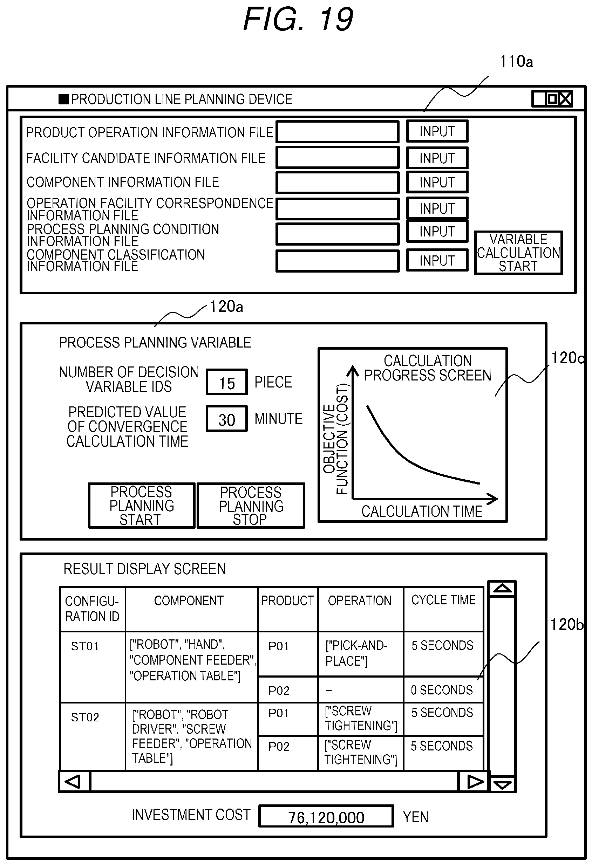

FIG. 19 is an example of an output screen of the production line planning device in the embodiment. A file input screen 110a is a screen on which an input device receives an input from the user. A button for starting processing of the production line planning device may be provided.

A process planning variable screen 120a is a screen on which the output device displays the process planning variable information to the user. An operation facility correspondence table, the component classification information, and the facility common ID information may be displayed. A result display screen 120b is a screen on which the output device displays the process planning result information to the user.

When the user inputs each file on the file input screen 110a and presses a variable calculation start button, the process planning variable information is calculated according to the processing illustrated in FIG. 13. The number of decision variables in the process planning variable information is displayed in a text box for the number of decision variable IDs.

By referring to past result data on the number of decision variables and the time required for an optimization calculation, a predicted value of the calculation time when the calculation time predicted based on the number of decision variables converges is output to the process planning variable screen 120a.

After confirming the predicted value of the calculation time, the user presses a process planning start button to start the optimization calculation, and a value of the objective function for the best solution at that time is output to a calculation progress screen 120c at regular time intervals.

As time passes, the objective function (cost) converges, and the user can terminate the calculation by pressing a process planning stop button. Alternatively, the user may wait for the calculation to end. When the calculation is terminated or ended, the process planning result information including the component of the facility, the product and the operation, and the cycle time for each configuration ID is output on the result display screen 120b, and the total investment cost is output.

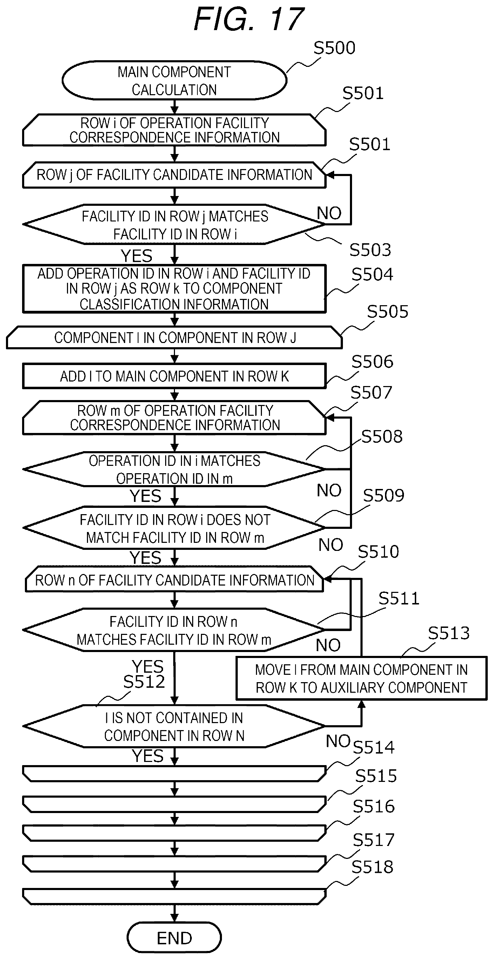

FIG. 17 is an example of a flowchart illustrating main component calculation processing in the embodiment. The main component calculation unit 145 uses the operation facility correspondence information 134 and the facility candidate information 133 to classify a component that is included in only one of the facility candidates that can be handled for a certain operation into a main component, and classifies other components into an auxiliary component, thereby creating the component classification information.

First, in S501, loop processing is started for all rows of the operation facility correspondence information in the operation facility correspondence information 134, and a row to be processed in the operation facility correspondence information 134 is assumed to be a row i. Next, in S502, loop processing is started for all rows of the facility candidate information in the facility candidate information 133, and a row to be processed in the facility candidate information 133 is assumed to be a row j. Next, in S503, it is determined whether the facility ID in the row i matches the facility ID in the row j. When there is no match, the loop processing in S502 is advanced. When there is a match, the process proceeds to S504.

Next, in S504, a row k is inserted into the component classification information 136, and the operation ID in the row i and the facility ID in the row j are stored. Next, in S505, loop processing is started for all component IDs included in the component in the row j, and a component ID l is set.

Next, in S506, the component ID l is added to the main component in the row k. Next, in S507, loop processing is started for all rows of the facility candidate information in the operation facility correspondence information 134, and a row to be processed in the operation facility correspondence information 134 is assumed to be a row m. Next, in S508, it is determined whether the operation ID in the row i matches the operation ID in the row m. When there is no match, the loop processing in S507 is advanced. When there is a match, the process proceeds to S509.

Next, in S509, it is determined whether the facility ID in the row i matches the facility ID in the row m. When there is a match, the loop processing in S507 is advanced. When there is no match, the process proceeds to S510. Next, in S510, loop processing is started for all rows in the facility candidate information 133, and a row to be processed in the facility candidate information 133 is assumed to be a row n. Next, in S511, it is determined whether the facility ID in the row n matches the facility ID in the row m. When there is no match, the loop processing in S510 is advanced. When there is a match, the process proceeds to S512.

Next, in S512, it is determined whether the component ID l is included in the component in the row n. When not included, the process proceeds to S514. When included, the process proceeds to S513. Next, in S513, the component ID l is moved from the main component in the row k to the auxiliary component. The loop processing in S510 is advanced.

Next, in S514, the loop processing in S510 is advanced. When the loop processing ends, the process proceeds to S515. Next, in S515, the loop processing in S507 is advanced. When the loop processing ends, the process proceeds to S516. Next, in S516, the loop processing of S505 is advanced. When the loop processing ends, the process proceeds to S517.

Next, in S517, the loop processing in S502 is advanced. When the loop processing ends, the process proceeds to S518. Next, in S518, the loop processing in S501 is advanced. When the loop processing ends, the main component calculation ends.

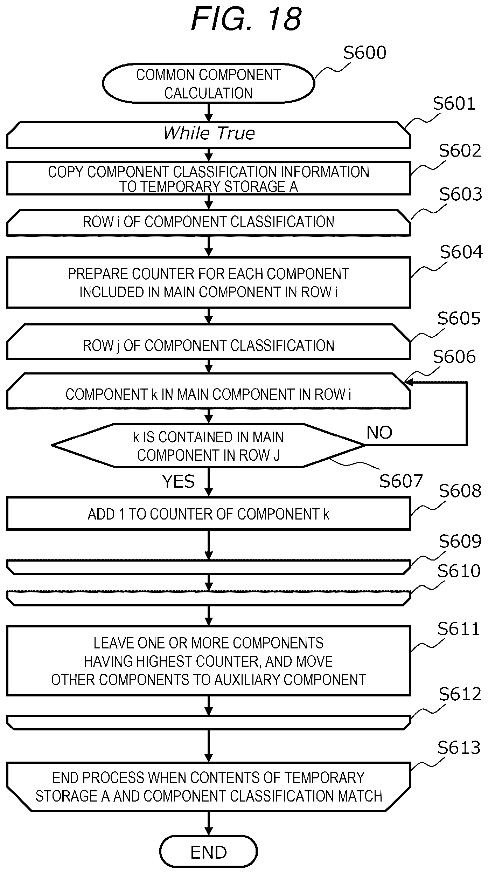

FIG. 18 is an example of a flowchart illustrating common component calculation processing in the embodiment. The common component calculation unit 146 uses the component classification information 136 to modify the component classification information by moving a non-common main component to the auxiliary component such that a component included in the main component is common to as many facility candidates as possible.

First, in S601, a sufficiently large loop is started. A timeout may be set by the number of loops or time. Next, in S602, the component classification information in the component classification information 136 is copied as temporary storage A. Next, in S603, loop processing is started for all rows of the component classification information in the component classification information 136, and a row to be processed in the component classification information 136 is assumed to be a row i.

Next, in S604, a counter capable of counting a number for each component ID included in the main component in the row i is prepared. Next, in S605, loop processing is started for all rows in the component classification information 136, and a row to be processed in the component classification information 136 is assumed to be a row j. Next, in S606, loop processing is started for all component IDs included in the main component in the row i, and a component ID k is set.

Next, in S607, it is determined whether the component ID k is included in the main component in the row j. When not included, the loop processing in S606 is advanced. When included, the process proceeds to S608. Next, in S608, 1 is added to the counter for the component ID k. Next, in S609, the loop processing in S606 is advanced. When the loop processing ends, the process proceeds to S610.

Next, in S610, the loop processing in S605 is advanced. When the loop processing ends, the process proceeds to S611. Next, in S611, among the component IDs included in the main component in the row i, the component ID other than the component ID having the highest appearance frequency is moved to the auxiliary component in the row i. A plurality of component IDs having a high appearance frequency may be left.

Next, in S612, the loop processing in S603 is advanced. When the loop processing ends, the process proceeds to S613. Next, in S613, it is determined whether the temporary storage A matches the component classification information in the component classification information 136. When there is no match, the loop processing in S601 is advanced. When there is a match, the common component calculation ends.

The invention is not limited to the embodiments described above, and includes various modifications. For example, the embodiments described above have been described in detail to facilitate understanding of the invention, and the invention is not necessarily limited to those including all the configurations described above. A part of a configuration of a certain embodiment can be replaced with a configuration of another embodiment, and the configuration of another embodiment can be added to a configuration of a certain embodiment. It is possible to add, delete, or replace a part of configurations of each embodiment with other configurations.

A part or all of the configurations, functions, processing units, processing methods, or the like described above may be implemented by hardware by designing with an integrated circuit. The configurations, functions, and the like described above may be implemented by software by a processor interpreting and executing a program for implementing each function. Information such as a program, a table, and a file for implementing each function can be stored in a recording device such as a memory, a hard disk, or a solid state drive (SSD), or in a recording medium such as an IC card, an SD card, or a DVD.

Control lines and information lines indicate what is considered to be necessary for description, and not necessarily all control lines and information lines are always shown on a product. Actually, almost all configurations may be considered to be connected to one another.

## Claims

1. A production line planning device for planning a production line for a product, the production line planning device comprising:
a storage unit configured to store
product operation information in which a product and an operation necessary for producing the product are associated and stored,
operation facility correspondence information in which the operation and a facility necessary for performing the operation are associated and stored,
component classification information in which a main component and an auxiliary component that make up the facility are associated and stored, and
facility common ID information in which the main component and a reference facility, which is a facility using the main component, are associated and stored;
a process planning variable calculation unit configured to, when the operation included in the product operation information matches the operation included in the operation facility correspondence information, add the operation, the facility, and a decision variable to process planning variable information in a case where the facility included in the matched operation facility correspondence information is not included in the reference facility in the facility common ID information;
a process planning variable cost calculation unit configured to obtain, based on the component classification information, a cost of the operation and the facility corresponding to the added decision variable; and
an output device configured to output the number of the decision variables added by the process planning variable calculation unit and an investment cost obtained by adding up costs of the respective decision variables obtained by the process planning variable cost calculation unit.

2. The production line planning device according to claim 1, further comprising:
a facility common ID calculation unit configured to create, based on the component classification information, the facility common ID information in which the main component commonly used by the facility and the reference facility, which is the facility using the main component, are associated and stored.

3. The production line planning device according to claim 1 or 2, further comprising:
a main component calculation unit configured to refer to the operation facility correspondence information and classify a component included in only one of facility candidates capable of handling the operation as the main component in the component classification information.

4. The production line planning device according to at least one of the previous claims, further comprising:
a common component calculation unit configured to set, as the auxiliary component, a component having an appearance frequency equal to or lower than a predetermined appearance frequency among components included in the main component in the component classification information.

5. A production line planning method for planning a production line for a product, the production line planning method comprising:
storing, in a storage unit,
product operation information in which a product and an operation necessary for producing the product are associated and stored,
operation facility correspondence information in which the operation and a facility necessary for performing the operation are associated and stored,
component classification information in which a main component and an auxiliary component that make up the facility are associated and stored, and
facility common ID information in which the main component of the facility and a reference facility are associated and stored;
adding, by a process planning variable calculation unit, when the operation included in the product operation information matches the operation included in the operation facility correspondence information, the operation, the facility, and a decision variable to process planning variable information in a case where the facility included in the matched operation facility correspondence information is not included in the reference facility in the facility common ID information;
obtaining, by a process planning variable cost calculation unit, based on the component classification information, a cost of the operation and the facility corresponding to the added decision variable; and
outputting, by an output device, the number of the decision variables added by the process planning variable calculation unit and an investment cost obtained by adding up costs of the respective decision variables obtained by the process planning variable cost calculation unit.
